(19) **Europäisches Patentamt**

**European Patent Office**

**Office européen des brevets**

(11) **EP 0 825 707 B1**

(12) **EUROPÄISCHE PATENTSCHRIFT**

(45) Veröffentlichungstag und Bekanntmachung des Hinweises auf die Patenterteilung:
   **27.06.2001 Patentblatt 2001/26**

(51) Int Cl.⁷: **H02P 7/67**

(21) Anmeldenummer: **97113099.2**

(22) Anmeldetag: **30.07.1997**

(54) **Lastausgleichsregelung von mehreren Antrieben**

Regulator for distributing the load on a plurality of driving devices

Regulateur pour distribuer une charge sur une pluralité de dispositifs d'entraînement

(84) Benannte Vertragsstaaten:
   **AT BE DE ES FR GB IT SE**

(30) Priorität: **17.08.1996 DE 19633213**

(43) Veröffentlichungstag der Anmeldung:
   **25.02.1998 Patentblatt 1998/09**

(73) Patentinhaber: **SMS Demag AG**
   **40237 Düsseldorf (DE)**

(72) Erfinder:
   • **Bode, Thorsten, Dipl-Ing.**
     **40211 Düsseldorf (DE)**
   • **Bernhardt, Jürgen, Dipl.-Ing.**
     **40235 Düsseldorf (DE)**

(74) Vertreter: **Valentin, Ekkehard, Dipl.-Ing. et al**
   **Patentanwälte Hemmerich, Valentin, Gihske, Grosse,**
   **Hammerstrasse 2**
   **57072 Siegen (DE)**

(56) Entgegenhaltungen:
   • **DATABASE WPI Section Ch, Week 8619 23.Mai 1986 Derwent Publications Ltd., London, GB; Class M21, AN 86-123725 XP002046487 & SU 1 184 065 A (SLAVYANSK METALLURG) , 7.Oktober 1985**
   • **DATABASE WPI Section EI, Week 9148 22.Januar 1992 Derwent Publications Ltd., London, GB; Class S02, AN 91351732 XP002046489 & SU 1 617 613 A (KUIBYSHEV POLY) , 30.Dezember 1990**
   • **DATABASE WPI 27.August 1980 Derwent Publications Ltd., London, GB; AN g2882c XP002046488 & SU 699 641 A (USTINOV GV) , 28.November 1979**
   • **PATENT ABSTRACTS OF JAPAN vol. 13, no. 270 (E-776) [3618] , 21.Juni 1989 & JP 01 060289 A (FUJI ELECTRIC CO LTD), 7.März 1989,**
   • **PATENT ABSTRACTS OF JAPAN vol. 11, no. 165 (E-510) [2612] , 27.Mai 1987 & JP 61 295897 A (KAWASAKI STEEL CORP.), 26.Dezember 1986,**

**Beschreibung**

Die Erfindung betrifft eine Lastausgleichsregelung von mehreren geregelten Antrieben, insbesondere an Richtmaschinen mit einzeln angetriebenen Richtrollen, mit einer übergeordneten Steuerung, die an separate Strom- und Drehzahlregelkreise eines jeden Antriebs zugeschaltete Lastausgleichsregler aufweist, wobei das Ausgangssignal des Lastausgleichsreglers auf einen Stromregler des jeweiligen Stromregelkreises geschaltet wird.

Wenn mehrere geregelte Antriebssysteme gleichzeitig an einem Bearbeitungsvorgang beteiligt sind, wie es der Fall bei Twin-Drive Walzgerüsten, Rollgangsantrieben, Anlagen zur Textil- und Papierherstellung und dergleichen ist, kommt es meist zu einer asymmetrischen Lastverteilung auf die einzelnen Antriebssysteme. Um diese asymmetrische Lastverteilung zu kompensieren, wird eine Lastausgleichsregelung der eingangs genannten Art, wie durch SU-A-699 641 bekanntgeworden, eingesetzt.

Weiterhin werden Regelungsverfahren realisiert, bei denen aus der Differenz der Ankerströme zweier benachbarter Antriebe ein Signal gewonnen wird, welches den Drehzahl-Sollwert im Drehzahlregelkreis des stärker belasteten Antriebs verkleinert und so zu einem Lastausgleich führt. Diese Form der Lastausgleichsregelung basiert auf einer Kaskadenregelung, d. h. einer Drehzahlregelung mit unterlagerter Stromregelung. Hierbei wird das Signal der Ausgleichsregelung zunächst dem im Vergleich zum Stromregler langsameren Drehzahlregler und von dort dem Stromregler zugeführt. Dies hat den Nachteil, dass die Lastausgleichsregelung nur relativ träge erfolgt. Eine solche Lastausgleichsregelung ist bei Maschinen mit hohen dynamischen Anforderungen ungenügend, wie sie sich z.B. beim Blecheinlauf in eine Richtmaschine ergeben.

Der Erfindung liegt die Aufgabe zugrunde, eine gattungsgemäße Lastausgleichsregelung ohne die eingangs beschriebenen Nachteile zu schaffen.

Diese Aufgabe wird erfindungsgemäß dadurch gelöst, dass das Eingangssignal des Lastausgleichsreglers aus der Differenz des Ist-Stromes $I_{ist}$ und des Soll-Wertes $I_{Ausgleich\ Soll}$ gebildet wird, wobei $I_{Ausgleich,\ Soll}$ mit Hilfe des Momentenverteilungsfaktors $K_i$ und des maximal auftretenden Stromes $I_j$ berechnet wird. Von jedem einzelnen Antrieb wird die aktuelle Stromaufnahme $I_{ist}$ gemessen und mit einem in einer übergeordneten Automatisierungseinheit, z.B. einer speicherprogrammierbaren Steuerung (SPS), berechneten Sollwert $I_{Ausgleich,\ Soll}$ verglichen. Ein sich aus dem jeweiligen Vergleich ergebener Strom-Korrekturwert wird als Eingangssignal auf den Lastausgleichsregler des jeweiligen Antriebs geschaltet. Der Soll-Wert $I_{Ausgleich,\ Soll}$ wird gemäß der nachfolgenden Formel berechnet:

$$I_{Ausgleich\ Soll} = \frac{I_j}{K_1}$$

| | |
|---|---|
| i: | Index für den jeweiligen Antrieb |
| $I_j$: | Stromistwert desjenigen Antriebs, der nach der Sollwerverteilung am stärksten belastet werden soll |
| $K_i(\geq 1)$: | Verteilungsfaktoren der Antriebe bezogen auf den am stärksten belasteten Antrieb |

Ist beispielsweise eine Lastverteilung gewünscht, bei der die Momente der einzelnen Antriebe durchweg verschieden sind, so besitzt jeder Antrieb einen anderen $K_i$ Faktor und somit jeder Lastausgleichsregler einen andren Soll-Wert $I_{Ausgleich,\ Soll}$.

Um - wiederum am Beispiel einer Richtmaschine - eine vor dem Richtprozeß eingestellte Lastverteilung - die während des Richtprozesses eingehalten wird - zu realisieren, werden in der SPS entsprechende Soll-Werte $I_{Ausgleich,\ Soll}$ fest einprogrammiert. Diese Art der Lastverteilung wird nachfolgend anhand von drei einzelnen Antrieben näher erläutert:

Wird beispielsweise eine Lastverteilung gewünscht, bei der auf die Antriebe 1 und 3 jeweils genau die Hälfte der Last des Antriebes 2 entfallen soll, berechnet sich der Soll-Wert $I_{Ausgleich,\ Soll}$ für die Antriebe 1 und 3 gemäß der vorgenannten Formel in der Weise, daß als $I_j$ der Strom $I_{ist}$ des zweiten Antriebes zugrundegelegt und dann durch den $K_i$-Faktor 2 dividiert wird. Der Soll-Wert $I_{Ausgleich,\ Soll}$ für den zweiten Antrieb wird in diesem Falle nicht berechnet respektive als Lastverteilungsfaktor $K_i = 1$ zugrundegelegt.

Nach einer weiteren Ausgestaltung der Erfindung wird ein Lastausgleichsregler mit proportional-integralem Verhalten verwendet. Der sogenannte PI-Regler besitzt ein sehr dynamisches Regelverhalten, wodurch sich erreichen läßt, daß das aus dem Vergleich Strom $I_{ist}$ und Soll-Wert $I_{Ausgleich,\ Soll}$ resultierende Korrektursignal nicht nur proportional verstärkt, sondern auch entsprechend aufintegriert wird. Dies gewährleistet, daß das Regelziel, nämlich einen Antrieb - je nach gewünschter Lastverteilung entweder stärker zu belasten oder zu entlasten - stets eingehalten und somit eine Regelabweichung verhindert wird.

Eine weitere Ausgestaltung der Erfindung sieht vor, daß in jedem Drehzahlregelkreis ein Drehzahlregler mit einer proportionalen Rückkoppelung verwendet wird. Somit ist es möglich, das Ausgangssignal des ansonsten gegenüber dem Lastausgleichsregler dominanten Drehzahlreglers nach oben hin zu begrenzen, indem das Ausgangssignal des Drehzahlreglers I proportional zwischen 0-25% auf den Eingang zurückgeführt wird.Dies bewirkt, daß der Lastausgleichsregler nicht an seine Regelgrenze läuft, was zwangsläufig eine bleibende Regelabweichung zur Folge hätte. Die Lastverteilung kann jetzt mit einer Regelabweichung von zu Null angefahren werden, wodurch mit Sicherheit die vorgesehene Lastverteilung erreicht wird.

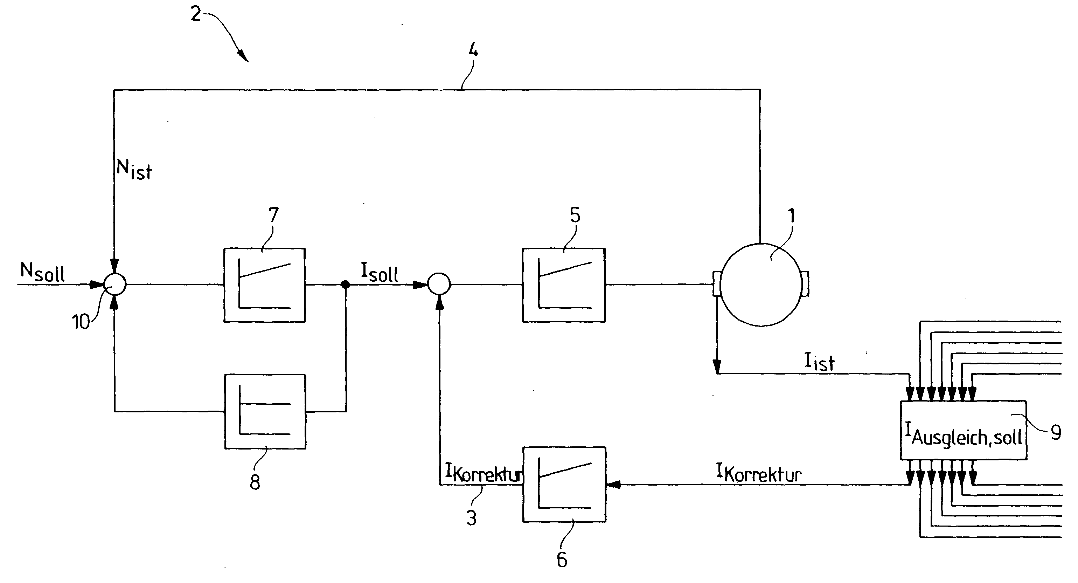

Weitere Einzelheiten und Vorteile der Erfindung ergeben sich aus den Ansprüchen und der nachfolgenden Beschreibung eines in der Zeichnung dargestellten Ausführungsbeispiels der Erfindung.

In der einzigen Figur ist das Prinzip eines lastausgleichenden Regelverfahrens mit einem Lastausgleichsregler, schematisch dargestellt. Das Regelschema zeigt einen von mehreren Antrieben 1, die alle in einen lastausgleichenden Regelkreis 2 eingebunden sind. Der Antrieb 1 besitzt jeweils einen separaten Stromregelkreis 3 und einen Drehzahlregelkreis 4. Der Stromregelkreis 3 weist einen Stromregler 5 und einen Lastausgleichsregler 6 auf. Im Drehzahlregelkreis 4 befindet sich ein Drehzahlregler 7, dem eine proportionales Rückkopplungsglied 8 parallel zugeschaltet ist.

Die aktuelle Stromaufnahme $I_{ist}$ des Antriebes 1 - wie auch die jeweilige Stromaufnahme der anderen Antriebe - wird als Eingangssignal auf eine übergeordnete, speicherprogrammierbare Steuerung 9 - hier als Black Box dargestellt - geschaltet. Die speicherprogrammierbare Steuerung 9 ermittelt dann für jeden Antrieb einen Sollwert $I_{Ausgeich, Soll}$, der sich nach der eingangs genannten Formel berechnet. Der jeweils ermittelte Sollwert $I_{Ausgleich, Soll}$ wird anschließend mit der entsprechenden Stromaufnahme $I_{ist}$ verglichen und ein aus dem jeweiligen Vergleich resultierender Strom-Korrekturwert $I_{Korrektur}$ - der entsprechend der ermittelten Lastverteilung kleiner, größer oder gleich der zugrundegelegten Stromaufnahme sein kann - auf den Lastausgleichsregler 6 geschaltet.

Der Lastausgleichsregler 6 besitzt hinsichtlich seiner Dynamik ein proportional-integrales Verhalten (PI), so daß das Eingangssignal $I_{Korrektur}$ nicht nur proportional verstärkt, sondern auch entsprehend aufintegriert wird. Das Ausgangssignal des Lastausgleichsreglers 6 ist auf den am Eingang des Stromreglers 5 bzw. Ausgang des Drehzahlreglers 7 anstehenden Strom-Sollwert $I_{Soll}$ geschaltet. Der Strom-Sollwert $I_{Soll}$ wird entsprechend dem für den Antrieb 1 ermittelten Strom-Korresturwert $I_{Korrektur}$ vergrößert, verkleinert bzw. nicht korrigiert. Der so neu entstandene Strom-Sollwert $I_{Soll}$ wird über den Stromregler 5 - der ebenfalls ein proportional-integrales Verhalten besitzt - dem Antrieb zugeführt.

Das Ausgangssignal, d.h. Strom-Sollwert $I_{Soll}$ des Drehzahlreglers 7 wird hierbei über das Rückkopplungsglied 8 proportional, zwischen 0 bis 25%, auf den Eingang des Drehzahlreglers 7 zurückgeführt, und dort auf die Additionsstelle 10 - Drehzahl-Istwert $N_{Ist}$ und externer Drehzahl-Sollwert $N_{Soll}$ - geschaltet. Dies bewirkt, daß das Ausgangssignal des ansonsten "hart" auf Drehzahl regelnden Drehzahlregler 7 nach oben hin begrenzt wird. Die Dominanz des Drehzahlreglers - gegenüber dem Lastausgleichsregler - nimmt dadurch ab, so daß der Lastausgleichsregler 6 nicht mehr gegen seine feste Regelgrenze läuft. Die für den Antrieb 1 vorgesehene Lastverteilung kann daher mit einer Regelabweichung von zu Null angefahren werden.

**Patentansprüche**

1. Lastausgleichsregelung von mehreren geregelten Antrieben (1), insbesondere an Richtmaschinen mit einzeln angetriebenen Richtrollen, mit einer übergeordneten Steuerung (9), die an separate Strom- und Drehzahlregelkreise (3 bzw. 4) eines jeden Antriebs (1) zugeschaltete Lastausgleichsregler (6) aufweist, wobei das Ausgangssignal des Lastausgleichsreglers (6) auf einen Stromregler (5) des jeweiligen Stromregelkreises (3) geschaltet wird, **dadurch gekennzeichnet,** dass das Eingangssignal des Lastausgleichsreglers (6) aus der Differenz des Ist-Stromes ($I_{ist}$) und des Sollwertes ($I_{Ausgleich, Soll}$) gebildet wird, wobei der Sollwert ($I_{Ausgleich, Soll}$) mit Hilfe eines Momentenverteilungsfaktors ($K_i$) und des maximal auftretenden Stromes ($I_j$) berechnet wird.

2. Regelung nach Anspruch 1, **dadurch gekennzeichnet,** dass ein Lastausgleichsregler (6) mit proportional-integralem (PI) Verhalten verwendet wird.

3. Regelung nach Anspruch 1 oder 2, **dadurch gekennzeichnet,** dass in jedem Drehzahlregelkreis (4) ein Drehzahlregler (7) mit einer proportionalen Rückkopplung (8) verwendet wird.

**Claims**

1. Load-equalising regulation of several regulated drives (1), especially at straightening machines with individually driven straightening rollers, with a superordinate control (9), which comprises load-equalising regulators (6) connected to separate current and rotational speed regulating circuits (3 and 4) of each drive (1), wherein the output signal of the load equalising regulator (6) is applied to a current regulator (5) of the respective current regulating circuit (3), characterised in that the input signal of the load-equalising regulator (6) is formed from the difference of the actual current ($I_{actual}$) and of the target value ($I_{equalising, target}$), wherein the target value ($I_{equalising, target}$) is calculated with the aid of a torque distribution factor ($K_i$) of the maximum arising current ($I_j$).

2. Regulator according to claim 1, characterised in that a load-equalising regulator (6) with a proportional-integral (PI) behaviour is used.

3. Regulator according to claim 1 or 2, characterised in that a rotational speed regulator (7) with a proportional feedback (8) is used in each rotational speed regulating circuit (4).


**Revendications**

1. Régulation d'égalisation de charge de plusieurs systèmes d'entraînement régulés (1), en particulier dans des machines de dressage comprenant des galets de dressage individuellement entraînés, comprenant une commande maître (9), qui comprend des régulateurs d'égalisation de charge (16) raccordés à des circuits séparés de régulation d'alimentation et de régulation de vitesse de rotation (3, respectivement 4) de chaque système d'entraînement (1), dans laquelle le signal de sortie du régulateur d'égalisation de charge (6) est appliqué à un régulateur d'alimentation (5) du circuit de régulation d'alimentation respectif (3),
caractérisée en ce que
le signal d'entrée du régulateur d'égalisation de charge (16) est formé à partir de la différence du courant réel ($I_{réel}$) et de la valeur de consigne ($I_{égalisation, consigne}$), et la valeur de consigne ($I_{égalisation, consigne}$) est calculée avec l'aide d'un facteur de répartition de couple ($K_i$) et du courant maximum apparu ($I_i$).

2. Régulation selon la revendication 1,
caractérisée en ce que l'on utilise un régulateur d'égalisation de charge (6) avec comportement proportionnel/intégral (PI).

3. Régulation selon l'une ou l'autre des revendications 1 et 2,
caractérisée en ce que l'on utilise dans chaque circuit de régulation de vitesse de rotation (4) un régulateur de vitesse de rotation (7) avec rétroaction proportionnelle (8).